# EUROPÄISCHE PATENTANMELDUNG

(11) **EP 4 124 592 A1**
(43) Veröffentlichungstag der Anmeldung: **01.02.2023**
(21) Anmeldenummer: 21187769.1
(22) Anmeldetag: 26.07.2021
(51) Int. Cl.: B65G 21/12, B65G 41/00, B65G 47/64

(54) **FÖRDERBRÜCKE, FÖRDERSYSTEM MIT FÖRDERBRÜCKE UND VERFAHREN ZUM ÜBERFÜHREN EINES STÜCKGUTS IN EINEM FÖRDERSYSTEM**

(71) Anmelder: Siemens Aktiengesellschaft, 80333 München (DE)
(72) Erfinder: ASCHPURWIS, Carsten, 78464 Konstanz (DE); KLOSSEK, Andreas, 90547 Stein-Deutenbach (DE); MUECK, Bengt, 90429 Nürnberg (DE)
(74) Vertreter: Siemens Patent Attorneys

(57) **Zusammenfassung**

Zur Verteilung von Stückgütern (6) in einem Fördersystem (4) von einer Förderstrecke (8) auf mehrere horizontal und vertikal verteilte Sortierziele (10) dient eine Förderbrücke (2) umfassend eine Brückenstrecke (12), zwei Ankervorrichtungen (14) und zwei Verbindungsvorrichtungen (16). Die Brückenstrecke (12) ist um einen Drehpunkt (20) herum vertikal und/oder horizontal schwenkbar fixiert und an zwei Verbindungspunkten (22) jeweils über eine der Verbindungsvorrichtungen (16) beweglich verbunden mit einer der Ankervorrichtungen (14). Ein individuell angesteuertes Verfahren der Ankervorrichtungen (14) bewirkt ein Schwenken der Brückenstrecke (12) um den Drehpunkt (20) herum zu einem ausgewählten Sortierziel (10). Durch die Abstützung an drei verschiedenen Punkten (20, 22) und das individuelle Verfahren der Ankervorrichtungen (14) wird die horizontale und vertikale Verteilung der Stückgüter (6) bei hoher Stabilität mit geringem konstruktiven Aufwand ermöglicht.

## Beschreibung

Die vorliegende Erfindung betrifft das technische Gebiet der Förderbrücken in Fördersystemen für Stückgüter.

Stückgüter müssen in Fördersystemen häufig auch sortiert werden. Verschiedene Sortierziele sind hierbei weit voneinander entfernt und/oder liegen neben- und/oder übereinander, d.h. horizontal und/oder vertikal verteilt, beispielsweise in einem Lager. Gerade Lagerlösungen haben oft Sortierziele nebenund übereinander bei einem niedrigen Durchsatz. Eine zugleich horizontale und vertikale Verteilung von Stückgütern mit Gurtfördertechnik ist bisher nur mit aufwendiger Technik möglich, z.B. mit Regalbediengeräten oder Shuttle Systemen.

Bisher sind innerhalb von reinen Gurtfördersystemen nur Sortierlösungen für entweder eine vertikale Verzweigung (Vertical Sort Unit) oder eine horizontale Verzweigung (z.B. Pusher) bekannt. Zudem existieren Lösungen von Gurtförderern auf Drehtellern. In kleinen Varianten können so horizontal oder alternativ vertikal zwei oder drei Sortierziele erreicht werden. Ringsorter haben Gurtförderer auf einem Drehteller montiert. Die Stückgüter werden von der Mitte auf die Förderer und, wenn der Förderer in der passenden Position ist, zum Sortierziel transportiert.

Alle diese Lösungen sortieren mit Ausnahme der aufwendigen Regalbediengeräte nur entlang einer Dimension. Dies limitiert die Anzahl der möglichen Sortierziele auf gegebenem Raum, da eine Sortierung auf neben- und übereinander liegende Sortierziele nur sequentiell erfolgen kann. Bei der sequentiellen Sortierung muss in der zweiten Sortierstufe pro Ausgang der ersten Stufe wenigstens ein Sortiergerät eingesetzt werden - somit erfordert eine horizontale und vertikale Sortierung mindestens zwei hintereinander angeordnete Sortiergeräte mit dem damit verbundenen Platzbedarf.

Die komplexeren, nicht rein auf Gurtfördertechnik basierten Lösungen zum Sortieren auf mehreren Ebenen, wie Shuttle Systeme und Regalbediengeräte, können viele Sortierziele bedienen. Fahrzeuge (häufig spurgebunden) nehmen die Stückgüter einzeln auf und transportieren diese entweder sequentiell (Shuttles mit einem Lift) oder mit einem fahrenden Lift (Regalbediengerät) auf die Zielhöhe. Das horizontale Verfahren geschieht durch Bewegung der Fahrzeuge selbst. Damit sind bei diesen Lösungen wenigstens Antriebe für das Heben, das Verfahren und das Aufnehmen/Abgeben erforderlich. Diese Lösungen sind somit komplexer als die auf reiner Gurtfördertechnik basierenden Lösungen. Der Durchsatz ist zudem durch die Zykluszeit eines Fahrzeugs beschränkt.

Eine Förderbrücke, die frei um einen Dreh- und Schwenkpunkt herum schwenkbar und an diesem fixiert ist, würde einige dieser Nachteile beheben, erfordert allerdings einen Antrieb sowohl für das Schwenken als auch für das Antreiben der Förderbrücke im Drehpunkt. Durch die auftretenden hohen Kräfte (Hebelkraft, bewegtes Gewicht der Förderbrücke selber, rasche Bewegung der Förderbrücke) müsste diese Lösung enorm stabil und schwer ausgebildet sein - um nicht zu kippen und eine ausreichende Stabilität zu gewährleisten. Je grösser die Winkel und je länger die Brückenstrecke, umso aufwendiger und teuer ist hierbei die Technik.

Der vorliegenden Erfindung liegt daher die Aufgabe zugrunde, ein verbesserte Lösung für das Sortieren in Fördersystemen bereitzustellen. Gelöst wird diese Aufgabe durch die in den unabhängigen Ansprüchen beschriebenen Lösungen.

Die erfindungsgemäße Vorrichtung zeichnet sich aus durch eine Förderbrücke in einem Fördersystem für Stückgüter zwischen einer Zuführvorrichtung und Sortierzielen, umfassend eine Brückenstrecke, zwei Ankervorrichtungen und zwei Verbindungsvorrichtungen. Die Brückenstrecke weist an einem Ende einen Förderkopf und am anderen Ende einen Förderanfang auf und ist zwischen der zum Überführen von Stückgütern auf den Förderanfang ausgestalteten Zuführvorrichtung und den in einem Sortierzielbereich horizontal und/oder vertikal verteilt angeordneten Sortierzielen, mit dem Förderkopf auf Seite der Sortierziele und dem Förderanfang auf Seite der Zuführvorrichtung, anordenbar. Die Brückenstrecke ist um einen am Förderanfang positionierten Drehpunkt herum vertikal und/oder horizontal schwenkbar. Die Verbindungsvorrichtungen weisen jeweils ein erstes Verbindungselement oder jeweils ein erstes und ein weiteres Verbindungselement auf, wobei die Verbindungselemente jeweils beweglich mit einer der Ankervorrichtungen verbunden sind und die Verbindungselemente derselben Verbindungsvorrichtung beweglich miteinander verbunden sind. Die Brückenstrecke ist an zwei Verbindungspunkten zwischen Förderanfang und Förderkopf jeweils über eine der Verbindungsvorrichtungen verbunden mit einer der Ankervorrichtungen. Die Ankervorrichtungen sind individuell ansteuerbar verfahrbar, wobei ein Verfahren der Ankervorrichtungen ein Schwenken der Brückenstrecke um den Drehpunkt herum bewirkt, so dass der Förderkopf hin zu einem der Sortierziele bewegbar ist.

Die erfindungsgemäße Lösung sieht ein Fördersystem umfassend eine Zuführvorrichtung und in einem Sortierzielbereich horizontal und/oder vertikal verteilt positionierbare Sortierziele vor. Die Sortierziele und/oder die Zuführvorrichtung weisen vorzugsweise einen ansteuerbaren Förderer, insbesondere ein Förderband, auf. Das Fördersystem umfasst zudem eine erfindungsgemäße Förderbrücke.

Hinsichtlich eines Verfahrens wird die vorstehend genannte Aufgabe gelöst durch ein Verfahren zum Überführen eines Stückguts in einem Fördersystem von einer Zuführvorrichtung über eine Brückenstrecke einer Förderbrücke in ein bestimmtes Sortierziel einer Auswahl von in einem Sortierzielbereich horizontal und/oder vertikal verteilt angeordneten Sortierzielen. Die Förderbrücke umfasst die Brückenstrecke, zwei verfahrbare Ankervorrichtungen und zwei Verbindungsvorrichtungen. Die Brückenstrecke weist an einem Ende einen Förderkopf und am anderen Ende einen um einen Drehpunkt herum vertikal und horizontal schwenkbar fixierten Brückenanfang auf. Die Verbindungsvorrichtungen weisen jeweils ein erstes Verbindungselement oder jeweils ein erstes und ein weiteres Verbindungselement auf, wobei die ersten Verbindungselemente jeweils beweglich, insbesondere gelenkig, vorzugsweise über ein Verbindungsgelenk, mit einer der Ankervorrichtungen verbunden sind und die Verbindungselemente derselben Verbindungsvorrichtung beweglich miteinander verbunden sind. Die Brückenstrecke ist an zwei Punkten zwischen Förderanfang und Förderkopf jeweils über eine der Verbindungsvorrichtungen mit einer der Ankervorrichtungen verbunden. Die Ankervorrichtungen sind individuell ansteuerbar verfahrbar. Das Verfahren umfasst die Verfahrensschritte:
a) Auswahl des Sortierziels und, falls der Förderkopf noch nicht in das ausgewählte Sortierziel mündet, angesteuertes Verfahren einer oder beider Ankervorrichtungen, wobei die Ankervorrichtungen vorzugsweise ober- oder unterhalb der Brückenstrecke verfahren werden, und/oder Ansteuern einer oder beider Verbindungsvorrichtungen, so dass die Brückenstrecke horizontal und/oder vertikal um den Drehpunkt am Förderanfang herum geschwenkt und der Förderkopf hin zu dem ausgewählten Sortierziel bewegt wird.
b) Transportieren eines Stückguts auf den Förderanfang und über die Brückenstrecke hin zum Förderkopf und in das ausgewählte Sortierziel hinein oder in umgekehrter Richtung.

Das Verfahren weist, soweit übertragbar, die gleichen Vorteile wie die Förderbrücke bzw. das Fördersystem auf. Die Verfahrensschritte müssen nicht sequentiell hintereinander ausgeführt werden. Die Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination kombinierbar. So sind Verfahrensmerkmale auch als Eigenschaft der entsprechenden Vorrichtungseinheit gegenständlich formuliert zu sehen und umgekehrt.

So können sich die folgenden Vorteile zusätzlich ergeben:
i) Die Größe des Sortierbereichs ist horizontal nur durch das maximale Gefälle der Brückenstrecke und vertikal nur durch die maximale Schwenkzeit (großer Winkel - lange Schwenkzeit und dementsprechend negative Auswirkung auf den Durchsatz) beschränkt.
ii) Die Förderbrücke als Verbindungselement ist sehr robust und stabil ohne dass auf den Drehpunkt hohe Kräfte wirken, da eine Abstützung über die Ankervorrichtungen stattfindet. Durch diese Abstützung kann die Brückenstrecke problemlos verlängert werden, wodurch mehr Sortierziele erreichbar sind.
iii) Die Entkoppelung von Schwenken und Transport erlaubt die Verwendung technisch unkomplizierter Lösungen, die einfach zu beschaffen, zu betreiben und zu warten sind.
iv) Die erfindungsgemäße Lösung ist sehr kompakt im Vergleich zum Stand der Technik - das Verteilen von Stückgütern in zwei Dimensionen (horizontal und vertikal) erfordert nur eine Vorrichtung.

Die erfindungsgemäße Lösung kann durch verschiedene, jeweils für sich vorteilhafte und, sofern nicht anders ausgeführt, beliebig miteinander kombinierbare Ausgestaltungen, die sich aus den Unteransprüchen ergeben, weiter verbessert werden. Auf diese Ausgestaltungsformen und die mit ihnen verbundenen Vorteile wird im Folgenden eingegangen.

Die Brückenstrecke ist eine Förderstrecke die als Verbindungselement zwischen der Zuführvorrichtung und mehreren Sortierzielen agiert. Durch das Schwenken der Brückenstrecke mündet der Förderkopf in ein bestimmtes der Sortierziele. Die genaue Ausgestaltung kann variieren, wobei die Brückenstrecke sowohl einen aktiv antreibbaren und ansteuerbaren Förderer (z.B. Förderband, Rollenförderer o.ä.) umfassen kann oder als passive Brückenfahrbahn, über welche die Stückgüter aktiv transportiert werden müssen, ausgestaltet sein kann. Der Förderkopf als Ende der Brückenstrecke kann, muss jedoch nicht überlappend mit dem ausgewählten Sortierziel positionierbar sein. Der Förderkopf kann auch einfach angrenzend, ohne Überlappung, an die Sortierziele positioniert werden.

Die Beweglichkeit der Verbindung der Verbindungsvorrichtung mit der Ankervorrichtung bzw. mit der Brückenstrecke und die Beweglichkeit der Verbindung der Verbindungselemente ist erforderlich um die Brückenstrecke um den Drehpunkt herum hin zu den zu Sortierzielen zu schwenken. Eine bewegliche Verbindung kann sowohl eine eingeschränkte, scharnierartige Beweglichkeit, als auch eine weitergehende dreidimensionale, kugelgelenkartige Beweglichkeit und auch eine noch freiere Beweglichkeit der Verbindung beschreiben. Eine bewegliche Verbindung ist gelenkig, ohne dass die Verbindungsvorrichtung notwendiger ein spezielles Gelenk umfassen muss, aber kann.

Die Ankervorrichtungen sind verschiebbare Fußpunkte, welche zusammen mit der Verankerung am Drehpunkt das Gewicht der Brückenstrecke tragen. Die Förderbrücke kann somit als asymmetrisches Dreibein angesehen werden, wobei der Drehpunkt am Förderanfang fixiert (z.B. über ein von der Förderbrücke umfasstes Drehgelenk) und die restliche Brückenstrecke um diesen Drehpunkt herum beweglich schwenkbar ist. Typischerweise wird der Förderanfang auf Höhe oder unterhalb, evtl. überlappend der Zuführvorrichtung angeordnet werden, insbesondere falls die Zuführvorrichtung ein einfacher Förderer, z.B. ein Förderband, ist.

Die Bewegung der Brückenstrecke wird erzeugt durch Verschiebung der beiden Ankervorrichtungen. Die Bewegung der Ankervorrichtungen ist für den Fachmann ohne erfinderisches Zutun auf vielfältige Art und Weise realisierbar. Die beiden als Verbindungspunkte agierenden Punkte, an denen die Verbindungsvorrichtungen angreifen, können am seitlichen Rand der Brückenstrecke oder zwischen der Brückenstreckenmitte und dem seitlichen Rand angeordnet sein. Es ist auch möglich, dass die beiden Verbindungspunkte übereinstimmen. Diese Punkte sind an einer Stelle zwischen Förderkopf und der Fixierung am Förderanfang angeordnet. Um ein entsprechendes Schwenken der Brückenstrecke zu erreichen, müssen bei einer Positionierung dieser Verbindungspunkte weiter weg vom Förderkopf die Ankervorrichtungen über kleinere Strecke verschoben werden, allerdings wirken stärkere Hebelkräfte, so dass die Abstützung durch die Verbindungs- und Ankervorrichtungen dementsprechend stabiler ausgestaltet werden muss.

Der Förderkopf als Ende der Brückenstrecke kann, muss jedoch nicht überlappend mit den Sortierziele positionierbar sein, sondern kann auch angrenzend an diese positioniert werden, um das Stückgut in das entsprechende Sortierziel hinein zu befördern. Unter der Zuführvorrichtung soll insbesondere eine Vorrichtung verstanden werden, die Stückgüter auf die Brückenstrecke befördert, möglich z.B. durch Ausgestaltung als einfacher Förderer, der in die Brückenstrecke mündet. Sie kann jedoch auch als Aufnahmevorrichtung (z.B. durch Antreiben eines umfassten Förderers weg von der Brückenstrecke) ausgestaltet sein, so dass die erfindungsgemäße Brückenstrecke und das erfindungsgemäße Verfahren Stückgüter wahlweise in beide Richtungen transportieren kann. Die Sortierfächer sind in dem Sortierzielbereich wahlfrei anordenbar.

Das horizontale Verschieben der Ankervorrichtungen auf vordefinierten Bahnen (Linear- bzw. Winkelposition im Verhältnis zur Brückenstrecke) oder frei auf einer Ebene bewirkt ein gezieltes Schwenken des Förderkopfes hin zu dem ausgewählten Sortierziel.

Um die Stückgüter ohne weiteren Antrieb über die Brückenstrecke zu transportieren, kann die Brückenstrecke gemäß einer Ausführungsform einen ansteuerbaren Förderer, insbesondere ein Förderband, aufweisen. Dies erlaubt das Transportieren des Stückguts über die Brückenstrecke durch den von der Brückenstrecke umfassten Förderer. Ohne Förderer erfolgt das Transportieren über die Brückenstrecke durch ein über die Brückenstrecke fahrendes Förderfahrzeug, z.B. ein fahrerloses Transportfahrzeug (AGV). Wenn die Sortierziele unterhalb der Zuführvorrichtung angeordnet sind, ist auch eine Realisierung als Transportrutsche möglich, wobei das Rutschen durch Transportrollen erleichtert werden kann.

Gemäß einer Ausführungsform kann die Förderbrücke zudem umfassen eine oder mehrere Führungsvorrichtungen entlang derer die Ankervorrichtungen verfahrbar sind. Ein Antrieb der Ankervorrichtungen entlang einer Führungsvorrichtung ist für den Fachmann trivial realisierbar, z.B. über Zahnriemen, Spindel, pneumatisch oder hydraulische Antriebe. Bei einer Ausgestaltung der Ankervorrichtung als Schlitten wird dieser beweglich mit der Verbindungsvorrichtung verbunden verschoben. Die Führungsvorrichtung, z.B. eine Führungsschiene, nimmt die wirkenden Vertikal- und Querkraft auf, wodurch das Verschieben der Ankervorrichtungen erleichtert und die Förderbrücke mit einfachen Mitteln sehr stabil ist.

Gemäß einer weiteren Ausführungsform kann die Führungsvorrichtung einen gebogenen, insbesondere einen kreisförmigen, und/oder einen geraden Abschnitt aufweisen. Bei einer kreisförmigen Führungsvorrichtung haben die Ankervorrichtungen stets den gleichen Abstand zur Mitte der Brückenstrecke, die Bewegung der Ankervorrichtungen sind symmetrisch und die Ansteuerung ist dementsprechend einfach. Ein gemeinsames Verfahren beider Ankervorrichtungen mit konstantem Abstand bewirkt eine rein horizontale Bewegung, eine Verringerung bzw. Vergrößerung des Abstands der Ankervorrichtungen bewirkt ein hoch- bzw. runterschwenken des Förderkopfes. Die kreisförmige Lösung ist sehr kompakt, da die Ankervorrichtungen nicht weit aus dem Bereich der Brückenstrecke herauswandern, so dass eine +-90 Grad Auslenkung relativ zur Zuführvorrichtung möglich ist. Allerdings ist die technische Realisierung einer kreisförmigen Führungsvorrichtung nicht so trivial wie die Realisierung einer geraden, linearen Führungsvorrichtung, die kommerziell und zu günstigen Preisen erhältlich ist. Eine gerade Führungsvorrichtung erfordert jeweils zwei Verbindungselemente der Verbindungsvorrichtung. Diese zwei Verbindungselemente sind beweglich, vorzugsweise gelenkig, miteinander verbunden, eines der Verbindungselemente mit dem Verbindungspunkt der Brückenstrecke verbunden und das andere der Verbindungselemente beweglich, vorzugsweise gelenkig, mit der Ankervorrichtung verbunden. Die Verbindungen jeweils zwischen dem zweiten Verbindungselement und dem entsprechenden Verbindungspunkt können starr / unbeweglich ausgestaltet sein. Die Ansteuerung ist zwar komplizierter als bei einem kreisförmigen Verschieben, allerdings mit einem einfachen, einmaligen Programmieraufwand problemlos durchführbar. Bei einer weiten Auslenkung ragt zumindest eine Verbindungsvorrichtung weit aus dem Bereich der Brückenstrecke hinaus.

Gemäß einer weiteren Ausführungsform können das oder die Verbindungselemente seilartig oder anderweitig biegsam und/oder starr, insbesondere stangenartig, ausgestaltet sein. Das seilartige oder anderweitig biegsame Verbindungselement kann längenverstellbar sein, z.B. über eine seilwindenartige Vorrichtung, oder eine feste Länge aufweisen. Eine einfache Befestigung eines Seiles an einem starren ersten Verbindungselement ist beweglich ohne dass es hierfür eine spezielle Gelenkvorrichtung bedarf. Jegliche Gelenkvorrichtungen zur Verbindung der Verbindungselemente (miteinander; mit der Ankervorrichtung oder mit der Brückenstrecke) sind von der Verbindungsvorrichtung umfasst und ansteuerbar.

Gemäß einer weiteren Ausführungsform kann eine oder mehrere der beweglichen Verbindungen der Verbindungsvorrichtungen ansteuerbar einstellbare Verbindungsgelenke aufweisen und/oder die Länge von einem oder mehreren der Verbindungselemente kann einstellbar sein, um gemeinsam mit der Verfahrbarkeit der Ankervorrichtungen die wahlfreie Positionierung des Brückenkopfes zu ermöglichen. Um den Förderkopf hin zu einem bestimmten Sortierziel zu bewegen, können die Verbindungsgelenke - zusätzlich zum und gleichzeitig mit dem Verschieben der Ankervorrichtungen oder isoliert - und somit die Verbindungsvorrichtung ansteuerbar eingestellt werden. Durch Einstellung der Raumwinkel der Verbindungsgelenke bzw. aller beweglichen Verbindungen und der Positionierung der Ankervorrichtungen und/oder durch Variation der Länge von einem oder mehreren der Verbindungselemente wird die Ausrichtung der Verbindungselemente im Raum bestimmt und die Position der Brückenstrecke bzw. des Förderkopfes festgelegt.

Gemäß einer weiteren Ausführungsform können die Ankervorrichtungen auf einer Fahrfläche individuell ansteuerbar verfahrbar sein bzw. verfahren werden. Dies ist z.B. realisierbar, indem die Ankervorrichtungen eigene Antriebe aufweisen, beispielsweise durch Ausgestaltung als fahrerlose Transportfahrzeuge (AGV) mit sehr guter Bodenhaftung, oder indem die Ankervorrichtungen anderweitig, z.B. über Flächenmotoren, verfahrbar sind. Möglich ist die Realisierung eines Moving Floors oder eines in zwei Richtungen verfahrbaren elektromagnetischen Wanderfeldes als Läufer. Das individuelle Verfahren der Ankervorrichtungen auf der (nicht notwendigerweise perfekt ebenen) Fahrfläche kann entlang Kreisbahnen und/oder entlang gerader Strecken erfolgen. Die Fahrfläche erlaubt eine Anordnung mehrerer erfindungsgemäßer Förderbrücken nebeneinander in geringerem Abstand da so einander überschneidende Bewegungsräume von zu unterschiedlichen Förderbrücken gehörenden Ankervorrichtungen trivial möglich sind, einzig eine Kollision muss verhindert werden.

Gemäß einer weiteren Ausführungsform können die Ankervorrichtungen ober- oder unterhalb der Brückenstrecke verfahrbar sein bzw. verfahren werden. Durch Anordnung der Führungsvorrichtung(en) ober- oder unterhalb der Brückenstrecke kann die Förderbrücke auch dann in einem Fördersystem verwendet werden, wenn die räumlichen Möglichkeiten eine Anordnung der Führungsvorrichtung(en) unter- bzw. oberhalb der Brückenstrecke nicht erlauben.

Um den Durchsatz zu erhöhen kann gemäß einer Ausführungsform die Brückenstrecke geschwenkt werden, während ein oder mehrere Stückgüter auf der Brückenstrecke aufliegen und/oder transportiert werden. Die Förderbrücke wird für die entsprechende Belastung ausgelegt.

Ausführungsformen der Erfindung werden nachfolgend anhand der Figuren beispielsweise näher erläutert. Dabei zeigen:
- Figur 1: ein erfindungsgemäßes Fördersystem und Förderbrücke mit kreisförmiger Führungsvorrichtung;
- Figuren 2a-2c: eine Förderbrücke mit einer kreisförmiger Führungsvorrichtung und deren Ansteuerung;
- Figuren 3a, 3b: Positionierungsmöglichkeiten der Ankervorrichtungen ober- bzw. unterhalb der Brückenstrecke;
- Figuren 4a-4c: ein erfindungsgemäßes Fördersystem mit einer Förderbrücke umfassend zwei lineare Führungsvorrichtungen.

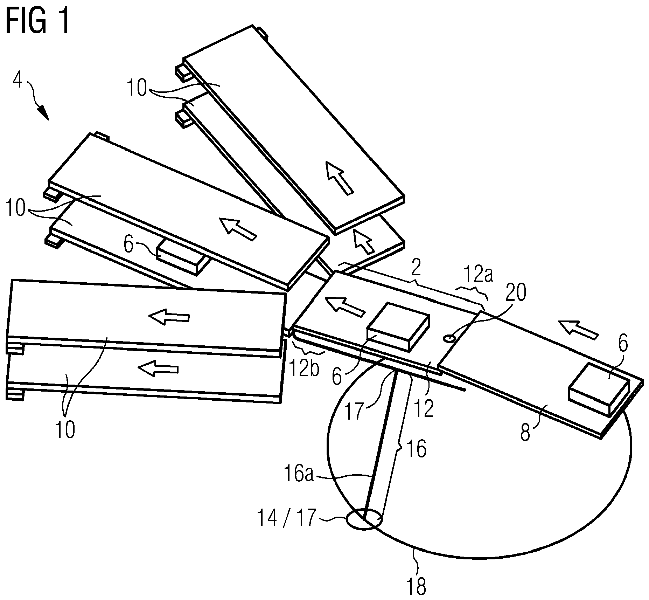

Die nachstehend detailliert beschriebenen Ausführungsbeispiele beziehen sich auf Fördersysteme 4 mit aktiv antreibbaren Förderbändern. Die Erfindung ist jedoch nicht auf solche Förderband-Fördersysteme 4 beschränkt, sondern für jede Art von Fördersystemen 4 anwendbar, bei denen eine Aufteilung von einer Förderstrecke 8 auf mehrere Sortierziele 10 erfolgen muss, beispielsweise AGV-Fördersysteme, bei denen die Förderstrecken 8, 10, 12 straßenartige Förderbahnen sind. Die Erfindung und das Verfahren kann außer in der mit Pfeilen angedeuteten Förderrichtung (Figur 1) auch in umgekehrter Richtung zum Vereinen von Stückgütern 6 von mehreren Förderstrecken auf eine gemeinsame Förderstrecke 8 durchgeführt werden. In diesem Fall agieren die Sortierziele 10 als Zuführvorrichtungen und die Zuführvorrichtung 8 als Aufnahmevorrichtung. Beides ist trivial realisierbar, z.B. durch Ausgestaltung der Sortierziele als einfache Förderbänder.

Figur 1 zeigt ein erfindungsgemäßes Fördersystem 4 umfassend eine Förderbrücke 2 mit kreisförmiger Führungsvorrichtung 18 gemäß einer Ausführungsform der Erfindung. Das Fördersystem 4 umfasst einen als Zuführvorrichtung 8 agierenden Zuführförderer (Förderstrecke) 8 welcher die Stückgüter 6 hin zur und auf die Brückenstrecke 12 der Förderbrücke 2 transportiert. Für jedes Stückgut 6 wird ein Sortierziel 10 ausgesucht.

Die Förderbrücke 2 umfasst eine Brückenstrecke 12, zwei Ankervorrichtungen 12 und zwei Verbindungsvorrichtungen 16. Die Brückenstrecke 12 weist an einem Ende einen Förderkopf 12b und am anderen Ende einen Förderanfang 12a auf und ist zwischen dem Zuführförderer 8 und neben und übereinander angeordneten Sortierzielen 10 positioniert - mit dem Förderkopf 12b auf Seite der Sortierziele 10 und dem Förderanfang 12a auf Seite der Zuführvorrichtung 8. Die Brückenstrecke 12 weist am Förderanfang einen Drehpunkt 20 auf, um welchen herum die Brückenstrecke 12 vertikal und horizontal schwenkbar ist hin zu dem für das betreffende Stückgut 6 ausgewählte Sortierziel 10. Die Brückenstrecke 12 ist an jeweils zwei Punkten 22 zwischen Förderanfang 12a und Förderkopf 12b über ein Verbindungselement 16a einer Verbindungsvorrichtung 16 beweglich mit einer Ankervorrichtung 14 verbunden. Die bewegliche Verbindung kann bei einer nur ein einziges Verbindungselement 16a umfassenden Verbindungsvorrichtung 16 auf mindestens zwei Arten erreicht werden: das Verbindungselement 16 ist bei hängender Befestigung und kreisförmiger Führungsvorrichtung 18 flexibel und somit seilartig oder anderweitig biegsam ausgestaltet, wobei die Flexibilität eine gelenkartige Bewegung der Verbindungen Seil-Ankervorrichtung 14 bzw. Seil-Verbindungspunkt 22 erlaubt und die Kreissymmetrie stellt eine Spannung der herabhängenden Seile und gerade Positionierung der Brückenstrecke 12 sicher. Oder das Verbindungselement 16 ist stangenartig und jeweils über Gelenke 17 mit der Ankervorrichtung 14 und der Brückenstrecke 12 verbunden. Wenn die Verbindungsvorrichtungen 16 jeweils nur ein Verbindungselement 16a umfassen, aber kein zweites Verbindungselement 16b aufweisen, sind sowohl die Verbindungen Verbindungselement 16a - Ankervorrichtung 14, als auch die Verbindungen Verbindungselement 16a - Brückenstrecke 12 beweglich ausgestaltet.

Insbesondere bei einer seilartigen Ausgestaltung der Verbindungselemente 16a und hängender Befestigung mit oberhalb der Brückenstrecke 12 angeordneter der Führungsvorrichtung(en) 18 ist es möglich, die vertikale Bewegung des Förderkopfes 12b nicht oder nicht allein durch Zusammen- bzw. Auseinanderfahren, also durch Veränderung des Abstands der Ankervorrichtungen 14, zu erzielen, sondern durch Verkürzen bzw. Verlängern der Länge der Verbindungselemente 16a, indem die Verbindungsvorrichtung 16 eine seilwindenartige Vorrichtung umfasst. Bei stangenartiger Ausgestaltung der Verbindungselemente 16a ist dies gemäß einer Ausführungsform auch möglich, indem die Verbindungselemente 16a teleskopartig ausgestaltet sind - hier können die Führungsvorrichtungen 18 auch unterhalb der Brückenstrecke 12 angeordnet sein.

In alternativen Ausführungsformen umfasst die Verbindungsvorrichtung 16 zwei oder noch mehr starre, jeweils miteinander verbundene Verbindungselemente 16a, 16b. Mindestens zwei der Verbindungen, vorzugsweise jeweils die Verbindungen zwischen ersten Verbindungselement 16a und Ankervorrichtung 14 und zwischen den Verbindungselementen 16a, 16b selber sind beweglich ausgestaltet, um auf einfache Weise eine wahlfreie Positionierung des Förderkopfes 12b zu ermöglichen.

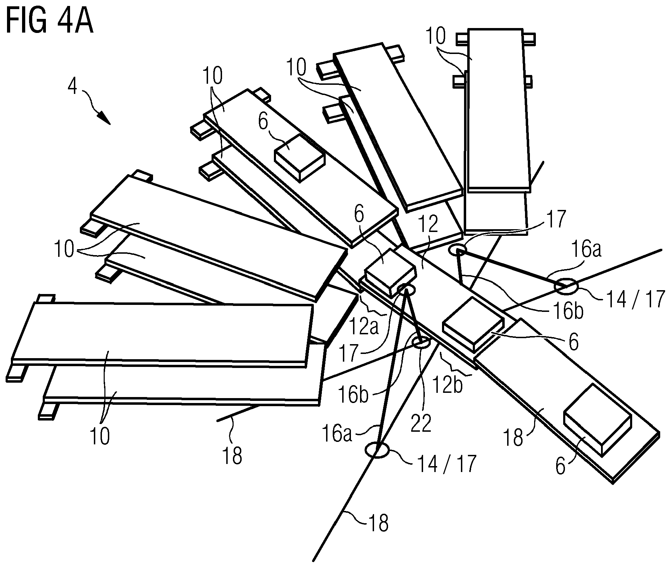

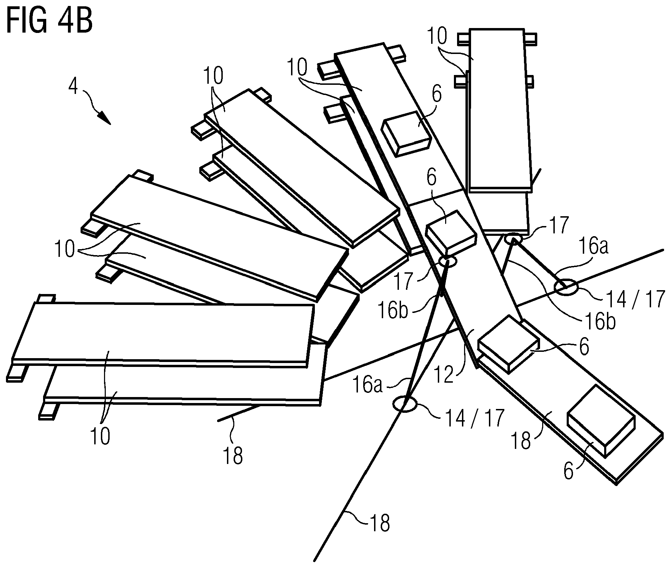

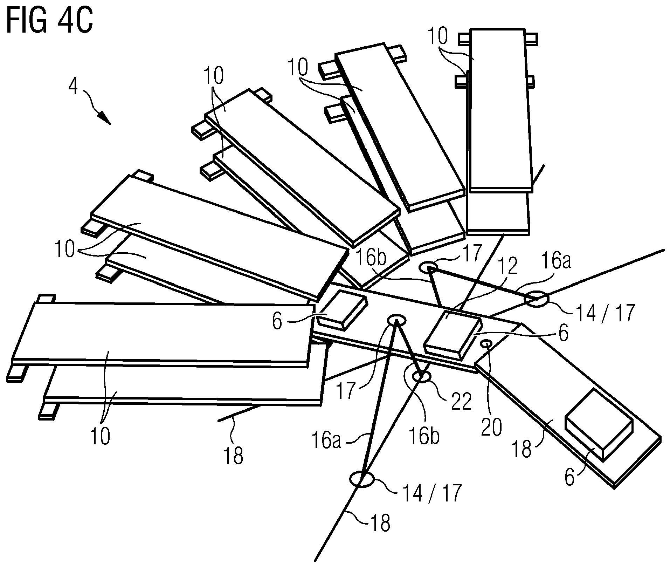

Es ist jedoch nicht erforderlich, dass alle Verbindungen beweglich sind - bei zwei Verbindungselementen 16a, 16b sind vorzugsweise die Verbindungen zwischen weiterem Verbindungselement 16b und Brückenstrecke 12 starr. Gemäß dieser Ausführungsform (Figuren 4a-4c) sind jeweils die zweiten Verbindungselemente 16b fest mit der Brückenstrecke 12 verbunden, so dass auch bei Bewegung der Brückenstrecke 12 durch Bewegung der Ankervorrichtungen 14 und/oder Einstellungen der Winkel die Abstände und Winkel der zweiten Verbindungselemente 16b und der Brückenstrecke 12 zueinander unverändert bleiben. An dem Verbindungspunkt 22 gibt es keinerlei Relativbewegungen von den Verbindungselementen 16b und der Brückenstrecke 12. Die Verbindungen der jeweiligen Verbindungselemente 16a, 16b miteinander sowie die jeweiligen Verbindungen der ersten Verbindungselemente 16a mit den Ankervorrichtungen 14 sind hingegen beweglich und ansteuerbar einstellbar.

Gemäß einer weiteren Ausführungsform sind auch die Verbindungen zwischen den zweiten Verbindungselementen 16b und der Brückenstrecke 12 an den Verbindungspunkten beweglich. Dies entspricht einer Überbestimmung des Bewegungsproblems, ist aber dennoch eine mögliche Ausführungsform.

Gemäß einer Ausführungsform stimmen die zwei Verbindungspunkte 22 zwischen der Brückenstrecke 12 und der Verbindungsvorrichtung 16 überein, dies ist kein Muss. Eine nicht übereinstimmende Positionierung der Verbindungspunkte 22 am seitlichen Rand der Brückenstrecke 12 bietet besonders hohe Stabilität gegen seitliches Kippen auch bei nicht-mittiger Beladung der Brückenstrecke 12 und beweglicher Verbindung von der Brückenstrecke mit der Verbindungsvorrichtung. Unter dem Begriff Ankervorrichtung 14 soll jede Vorrichtung verstanden werden, die eine bewegliche Befestigung und Verfahrbarkeit erlaubt und zudem mit der Verbindungsvorrichtung beweglich verbindbar ist, z.B. ein passiv oder aktiv verschiebbarer Schlitten 14 oder ein fahrerloses Transportfahrzeug 14, auf welchem jeweils das erste Verbindungselement 16a beweglich angebracht ist.

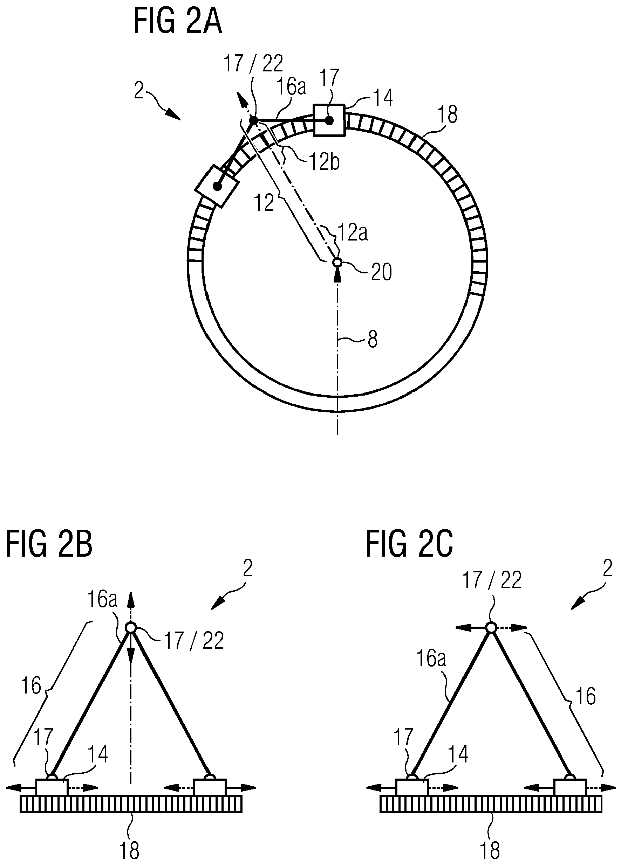

Die zweite Verbindungsvorrichtung 16 ist in der Perspektive von Figur 1 verdeckt, aber in den Figuren 2a-2c zu sehen. Durch symmetrisches Verschieben der in Figur 1 nicht genauer dargestellten Ankervorrichtungen 14 entlang der Kreisbahn der Führungsvorrichtung wird der Förderkopf 12b bzw. die Brückenstrecke 12 hin zu einem Stückgut 6 zugeordneten bzw. für dieses ausgewählte Sortierziel 10 geschwenkt. Die Brückenstrecke 12 kann mit einem oder mehreren aufliegenden Stückgütern 6 (und natürlich auch, wenn gerade keine Stückgüter 6 auf der Brückenstrecke 12 aufliegen) geschwenkt werden. Wenn der Förderkopf 12b vor dem für das Stückgut 6 ausgewählten Sortierziel 10 positioniert ist, wird dieses Stückgut 6 über die Brückenstrecke 12 hin zum Förderkopf 12b und in das ausgewählte Sortierziel 10 hinein befördert. Gemäß einer weiteren Ausführungsform wird das beschriebene Verfahren durch Ansteuern der Förderbänder in umgekehrter Richtung auch umgekehrt durchgeführt.

Schematisch vereinfacht in Aufsicht (Figur 2a) bzw. in seitlichem Querschnitt (Figuren 2b, 2c) wird die erfinderische Idee weiter illustriert. Bei einer kreisförmigen Führungsvorrichtung 18 mit einer hinsichtlich der Mittellinie der Brückenstrecke 12 symmetrischen Positionierung der Verbindungspunkte 22 ist die Position der Ankervorrichtungen 14 und die Länge der Verbindungselemente 16a hinsichtlich dieser Mittellinie stets symmetrisch (zumindest wenn die Brückenstrecke 12 nicht quer zur Transportrichtung geneigt werden soll). Um den Förderkopf 12b seitlich zu schwenken (Horizontalbewegung), werden die beiden Ankervorrichtungen 14 beide in die gleiche Richtung verschoben - dies bewirkt eine seitliche Verschiebung der in den Figuren 2a-2c übereinstimmenden Verbindungspunkte 22 (Figur 2c). Figur 2b zeigt das Zustandekommen eines Schwenken des Förderkopfes 12b nach oben bzw. unten durch Verringern bzw. Vergrößern des Abstands der Ankervorrichtungen 14. Gleichzeitige mit gestrichelten bzw. durchgezogenen Pfeilen gezeigte Bewegungen der Ankervorrichtungen 14 bewirken die mit gestrichelten bzw. durchgezogenen Pfeilen gezeigte Bewegung des Verbindungspunktes 22 und somit ein horizontales bzw. vertikales Schwenken des Förderkopfes 12b und somit der gesamten Brückenstrecke 12 um den Drehpunkt 20 herum. So kann die Brückenstrecke 12 geschwenkt werden und dadurch in jedes der in dem Sortierzielbereich angeordneten Sortierziele 10 münden. Die Größe des Sortierzielbereichs ist nur durch die maximal zulässige Steigung der Brückenstrecke 12 und die maximal tolerierte Schwenkzeit von den jeweils äußersten Sortierzielen 10 limitiert, so dass eine Vielzahl an neben- und/oder übereinander positionierten Sortierzielen 10 mit der erfindungsgemäßen Förderbrücke 2 erreichbar sind.

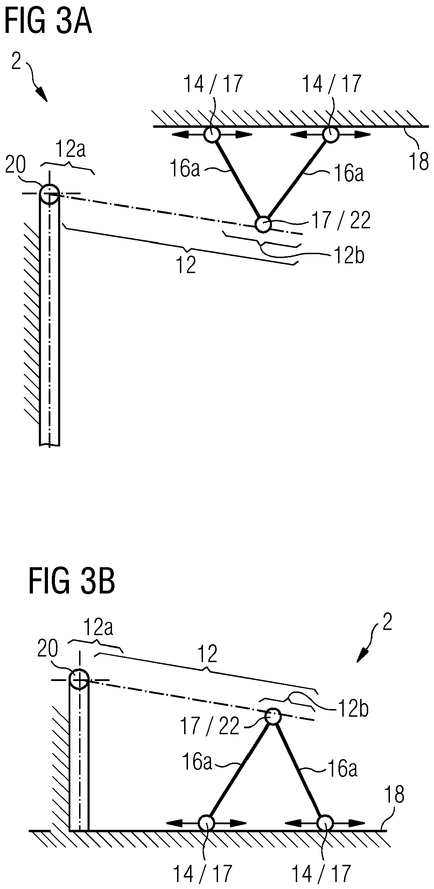

Ein Verfahren der Ankervorrichtungen 14, ihre Ausgestaltung als auf einer (typischerweise schienenartigen) Führungsvorrichtung 18 verfahrbare Schlitten 14 und die entsprechenden Antriebe sind für den Fachmann technisch einfach und ohne erfinderisches Zutun trivial realisierbar. Die Führungsvorrichtung(en) 18 nehmen die durch die Schrägstellung der Verbindungselemente 16a wirkenden Vertikal- und Querkräfte auf und es ist möglich, derartige Führungsvorrichtungen 18 sowohl unterhalb (Figur 3b) als auch oberhalb (Figur 3a) der Brückenstrecke 12 anzubringen. Eine hängende Befestigung der Verbindungspunkte 22 der Brückenstrecke 12 (Figur 3a) ist u.a. hinsichtlich Platzbedarf und Zugänglichkeit der Förderbrücke 2 vorteilhaft. Diese hängende Lösung erfordert eine Anordnung der Verbindungspunkte 22 am seitlichen Rand der Brückenstrecke 12.

Eine Realisierung von individuell ohne Führungsvorrichtung 18 verfahrbaren Ankervorrichtungen 14 ist ebenfalls möglich. Die Ankervorrichtungen 14 sind hierbei nicht an eine feste Route hinsichtlich ihrer Bewegungen gebunden. Die Ankervorrichtungen 14 müssen hierzu eine gute Bodenhaftung aufweisen. Realisierbar sind z.B. AGVs 14 oder indem die Ankervorrichtungen 14 anderweitig, z.B. über Schubböden, Moving Floor, oder über elektromagnetische Wandelfelder, bewegt werden. Frei verfahrenbare Ankervorrichtungen erlauben Kreuzung der Ankervorrichtungen 14 unterschiedlicher Förderbrücken 2 ohne dass hierfür Weichen für sich kreuzende Führungsvorrichtungen 18 unterschiedlicher Förderbrücken 2 bereitgestellt werden müssen. Die Ankervorrichtungen 14 können frei verfahren werden und so einander ausweichen. Dies erlaubt u.a. eine räumlich kompaktere Anordnung mehrerer Förderbrücken 2. Gemäß einer weiteren Ausführungsform ist es auch möglich, ein Fördersystem 4 bereitzustellen, bei dem alternierend Förderbrücken 2 mit oberhalb bzw. unterhalb der Brückenstrecke 12 angeordneten Führungsvorrichtungen 118, um die Kreuzungsproblematik zu entschärfen.

Die Figuren 4a-4c zeigen ein erfindungsgemäßes Fördersystem 4 mit erfindungsgemäßer Förderbrücke 2, wobei die Ankervorrichtungen 14 jeweils individuell entlang linearer Führungsvorrichtungen 18 bewegt werden, um eine bestimmte Position des Förderkopfes 12b zu erzielen. Da die Ansteuerung der Ankervorrichtungen 14 nicht symmetrisch ist, ist eine wahlfreie Positionierung des Förderkopfes 12b vor allen Sortierzielen 10 mit einer einmaligen Programmierung verbunden, um die erforderliche Positionierung beider Verbindungsvorrichtungen 16 und Ankervorrichtungen 14 zu bestimmen. Die Verbindungsvorrichtungen 16 umfassen jeweils zwei stangenartige Verbindungselemente 16a, 16b, die über ansteuerbare Gelenke 17 miteinander verbunden sind. Während bei einer Ausgestaltung mit kreisförmiger Führung 18 bzw. Bewegung der Ankervorrichtungen 14 die von den Ankervorrichtungen 14 und Verbindungsvorrichtungen 16 überstrichende Fläche geringgehalten werden kann, lenkt die armartige Verbindungsvorrichtung 16 mit linearer Bewegung der Ankervorrichtungen 14 bei großer horizontaler Auslenkung des Förderkopfes 12b sehr weit aus. Durch diese hohe Spreizung sind die auf die Verbindungsvorrichtungen 16 und Ankervorrichtungen 14 wirkenden Kräfte ungleichmäßig verteilt, so dass die ist diese stark asymmetrische Position eine stabilere Auslegung erfordert. Lineare Führungsvorrichtungen 18 sind zu geringen Kosten am Markt erhältlich.

Die Realisierung einer gebogenen Führungsvorrichtung 18, z.B. bei einer nicht-kreisförmigen Verteilung der Sortierziele 10, ist ebenfalls möglich.

Gemäß einer weiteren Ausführungsform sind die Ankervorrichtungen 14 auf einer Fahrfläche frei wählbar und individuell ansteuerbar verfahrbar. Dies erlaubt die Bereitstellung von temporären Förderbrücken 2 mit geringem Installationsaufwand und ermöglicht eine Kreuzung der Fahrwege mit den Ankervorrichtungen 14 anderer Förderbrücken 2 oder weiterer Vorrichtungen. Frei verfahrbare Ankervorrichtungen 12 erlauben zudem Ausweichmanöver.

Die Erfindung ermöglich eine Kombination aus vertikaler und horizontaler Weiche in einer Funktion um Stückgüter 6 auf mehr als eine Ebene (vertikal) und auf mehr als eine Richtung (horizontal) zu verteilen. Dies wird erreicht durch das voneinander unabhängige Verfahren der zwei Ankervorrichtungen 14, bei nicht-symmetrisch-kreisförmiger Führung der Ankervorrichtungen kombiniert mit der Ansteuerung der Verbindungsvorrichtungen 16 durch Einstellung der (Raum-)Winkel der Gelenke 17, allenfalls zusätzlich ergänzt über Variation der Länge der Verbindungselemente 16a.

### Bezugszeichenliste

- 2: Förderbrücke
- 4: Fördersystem
- 6: Stückgut
- 8: Zuführvorrichtung
- 10: Sortierziel
- 12: Brückenstrecke
- 12a: Förderanfang
- 12b: Förderkopf
- 14: Ankervorrichtung
- 16: Verbindungsvorrichtung
- 16a: Verbindungselement
- 16b: weiteres Verbindungselement
- 17: Gelenk
- 18: Führungsvorrichtung
- 20: Drehpunkt der Brückenstrecke
- 22: Verbindungspunkte Brückenstrecke-Verbindungsvorrichtung

## Patentansprüche

1. Förderbrücke (2) in einem Fördersystem (4) für Stückgüter (6) zwischen einer Zuführvorrichtung (8) und Sortierzielen (10), umfassend eine Brückenstrecke (12), zwei Ankervorrichtungen (14) und zwei Verbindungsvorrichtungen (16), wobei
- die Brückenstrecke (12) an einem Ende einen Förderkopf (12b) und am anderen Ende einen Förderanfang (12a) aufweist und zwischen der zum Überführen von Stückgütern (6) auf den Förderanfang (12a) ausgestalteten Zuführvorrichtung (8) und den in einem Sortierzielbereich horizontal und/oder vertikal verteilt angeordneten Sortierzielen (10), mit dem Förderkopf (12b) auf Seite der Sortierziele (10) und dem Förderanfang (12a) auf Seite der Zuführvorrichtung (8), anordenbar ist;
- die Brückenstrecke (12) um einen am Förderanfang (12a) positionierten Drehpunkt (20) herum vertikal und/oder horizontal schwenkbar ist;
- die Verbindungsvorrichtungen (16) jeweils ein erstes Verbindungselement (16a) oder jeweils ein erstes und ein weiteres Verbindungselement (16a, 16b) aufweisen, wobei die ersten Verbindungselemente (16a) jeweils beweglich mit einer der Ankervorrichtungen (14) verbunden sind und die Verbindungselemente (16a, 16b) derselben Verbindungsvorrichtung (16) beweglich miteinander verbunden sind;
- die Brückenstrecke (12) an zwei Verbindungspunkten (22) zwischen Förderanfang (12a) und Förderkopf (12b) jeweils über eine der Verbindungsvorrichtungen (16) verbunden ist mit einer der Ankervorrichtungen (14);
- die Ankervorrichtungen (14) individuell ansteuerbar verfahrbar sind, wobei ein Verfahren der Ankervorrichtungen (14) ein Schwenken der Brückenstrecke (12) um den Drehpunkt (20) herum bewirkt, so dass der Förderkopf (12b) hin zu einem der Sortierziele (10) bewegbar ist.

2. Förderbrücke (2) nach Anspruch 1, **dadurch gekennzeichnet, dass**
die Brückenstrecke (12) einen ansteuerbaren Förderer, insbesondere ein Förderband, aufweist.

3. Förderbrücke (2) nach einem der Ansprüche 1 bis 2, zudem umfassend
eine oder mehrere Führungsvorrichtungen (18) entlang derer die Ankervorrichtungen (14) verfahrbar sind.

4. Förderbrücke (2) nach Anspruch 3, **dadurch gekennzeichnet, dass**
die Führungsvorrichtung (18) einen gebogenen, insbesondere einen kreisförmigen, und/oder einen geraden Abschnitt aufweist.

5. Förderbrücke (2) nach einem der Ansprüche 1 bis 4, **dadurch gekennzeichnet, dass**
das oder die Verbindungselemente (16a, 16b) seilartig und/oder starr, insbesondere stangenartig, ausgestaltet sind.

6. Förderbrücke (2) nach einem der Ansprüche 1 bis 5, **dadurch gekennzeichnet, dass**
eine oder mehrere der beweglichen Verbindungen der Verbindungsvorrichtungen (16) ansteuerbar einstellbare Verbindungsgelenke (17) aufweisen und/oder dass die Länge von einem oder mehreren der Verbindungselemente (16a, 16b) einstellbar ist.

7. Förderbrücke (2) nach einem der Ansprüche 1 bis 6, **dadurch gekennzeichnet, dass**
die Ankervorrichtungen (14) auf einer Fahrfläche individuell ansteuerbar verfahrbar sind.

8. Förderbrücke (2) nach einem der Ansprüche 1 bis 7, **dadurch gekennzeichnet, dass**
die Ankervorrichtungen (14) ober- oder unterhalb der Brückenstrecke (12) verfahrbar sind.

9. Fördersystem (4) umfassend eine Zuführvorrichtung (8) und in einem Sortierzielbereich horizontal und/oder vertikal verteilt positionierbare Sortierziele (10), wobei die Sortierziele (10) und/oder die Zuführvorrichtung (8) vorzugsweise einen ansteuerbaren Förderer, insbesondere ein Förderband, aufweisen, zudem umfassend
eine Förderbrücke (2) nach einem der Ansprüche 1 bis 8.

10. Verfahren zum Überführen eines Stückguts (6) in einem Fördersystem (4) von einer Zuführvorrichtung (8) über eine Brückenstrecke (12) einer Förderbrücke in ein bestimmtes Sortierziel (10) einer Auswahl von in einem Sortierzielbereich horizontal und/oder vertikal verteilt angeordneten Sortierzielen (10), wobei
- die Förderbrücke die Brückenstrecke (12), zwei verfahrbare Ankervorrichtungen (14) und zwei Verbindungsvorrichtungen (16) umfasst;
- die Brückenstrecke (12) an einem Ende einen Förderkopf (12b) und am anderen Ende einen um einen Drehpunkt (20) herum vertikal und horizontal schwenkbar fixierten Brückenanfang aufweist;
- die Verbindungsvorrichtungen (16) jeweils ein erstes Verbindungselement (16a) oder jeweils ein erstes und ein weiteres Verbindungselement (16a, 16b) aufweisen, wobei die ersten Verbindungselemente (16a) jeweils beweglich, insbesondere gelenkig, vorzugsweise über ein Verbindungsgelenk (17), mit einer der Ankervorrichtungen (14) verbunden sind und die Verbindungselemente (16a, 16b) derselben Verbindungsvorrichtung (16) beweglich miteinander verbunden sind;
- die Brückenstrecke (12) an zwei Verbindungspunkten (22) zwischen Förderanfang (12a) und Förderkopf (12b) jeweils über eine der Verbindungsvorrichtungen (16) mit einer der Ankervorrichtungen (14) verbunden ist;
- die Ankervorrichtungen (14) individuell ansteuerbar verfahrbar sind;
umfassend die Verfahrensschritte:
a) Auswahl des Sortierziels (10) und, falls der Förderkopf (12b) noch nicht in das ausgewählte Sortierziel (10) mündet, angesteuertes Verfahren einer oder beider Ankervorrichtungen (14), wobei die Ankervorrichtungen (14) vorzugsweise oberoder unterhalb der Brückenstrecke (12) verfahren werden, und/oder Ansteuern einer oder beider Verbindungsvorrichtungen (16), so dass die Brückenstrecke (12) horizontal und/oder vertikal um den Drehpunkt (20) am Förderanfang (12a) herum geschwenkt und der Förderkopf (12b) hin zu dem ausgewählten Sortierziel (10) bewegt wird;
b) Transportieren eines Stückguts (6) auf den Förderanfang (12a) und über die Brückenstrecke (12) hin zum Förderkopf (12b) und in das ausgewählte Sortierziel (10) hinein oder in umgekehrter Richtung.

11. Verfahren nach Anspruch 10, **gekennzeichnet durch** Verfahren der Ankervorrichtungen (14) entlang einer oder mehrerer Führungsvorrichtungen (18), wobei der oder die Führungsvorrichtungen (18) einen gebogenen, insbesondere einen kreisförmigen, und/oder einen geraden Abschnitt aufweisen oder Verfahren der Ankervorrichtungen (14) auf einer Fahrfläche.

12. Verfahren nach einem der Ansprüche 10 bis 11, **gekennzeichnet durch**
Transportieren des Stückguts (6) über die Brückenstrecke (12) durch einen von der Brückenstrecke (12) umfassten Förderer,
insbesondere ein Förderband, oder durch ein über die Brückenstrecke (12) fahrendes Förderfahrzeug.

13. Verfahren nach einem der Ansprüche 10 bis 12, **gekennzeichnet durch**
ansteuerbares Einstellen des oder der Verbindungsgelenke (17) und/oder ansteuerbares Einstellen der Länge von einem oder mehreren der Verbindungselemente (16a, 16b).

14. Verfahren nach einem der Ansprüche 10 bis 13, **dadurch gekennzeichnet, dass**
das oder die Verbindungselemente (16a, 16b) seilartig und/oder starr, insbesondere stangenartig, ausgestaltet sind.

15. Verfahren nach einem der Ansprüche 10 bis 14, **dadurch gekennzeichnet, dass**
die Brückenstrecke (12) geschwenkt wird, während ein oder mehrere Stückgüter (6) auf der Brückenstrecke (12) aufliegen und/oder transportiert werden.
